(19) Europäisches Patentamt / European Patent Office / Office européen des brevets

(11) **EP 3 395 781 B1**

(12) **EUROPEAN PATENT SPECIFICATION**

(45) Date of publication and mention
of the grant of the patent:
**23.03.2022 Bulletin 2022/12**

(21) Application number: **16878717.4**

(22) Date of filing: **20.12.2016**

(51) International Patent Classification (IPC):
**B22F 10/28** (2021.01)   **B33Y 10/00** (2015.01)
**B33Y 70/00** (2020.01)   **B33Y 80/00** (2015.01)
**C22C 29/08** (2006.01)   **C22C 32/00** (2006.01)
**B22F 1/00** (2022.01)    **C22C 1/05** (2006.01)
**B29C 64/153** (2017.01)

(52) Cooperative Patent Classification (CPC):
(C-Sets available)
**B29C 64/153; B33Y 10/00; B33Y 70/00;**
**B33Y 80/00; C22C 1/05; C22C 29/06;** B22F 10/20;
B22F 2999/00; Y02P 10/25         (Cont.)

(86) International application number:
**PCT/JP2016/087985**

(87) International publication number:
**WO 2017/110828 (29.06.2017 Gazette 2017/26)**

(54) **ADDITIVE MANUFACTURING MATERIAL FOR POWDER RAPID PROTOTYPING MANUFACTURING**

ADDITIVES HERSTELLUNGSMATERIAL FÜR PULVER SCHNELLE PROTOTYPISIERUNGSHERSTELLUNG

MATÉRIEL DE FABRICATION ADDITIVE POUR LA FABRICATION DE PROTOTYPAGE RAPIDE DE POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2015 JP 2015250695**

(43) Date of publication of application:
**31.10.2018 Bulletin 2018/44**

(73) Proprietor: **Fujimi Incorporated**
**Kiyosu-shi, Aichi 452-8502 (JP)**

(72) Inventors:
• **IBE, Hiroyuki**
**Kiyosu-shi**
**Aichi 452-8502 (JP)**
• **YAMADA, Junya**
**Kiyosu-shi**
**Aichi 452-8502 (JP)**

(74) Representative: **Grünecker Patent- und Rechtsanwälte**
**PartG mbB**
**Leopoldstraße 4**
**80802 München (DE)**

(56) References cited:
**EP-A1- 3 159 141      WO-A1-2013/176058**
**WO-A1-2015/069849    WO-A1-2015/073081**
**WO-A1-2015/109658    WO-A1-2015/194678**
**WO-A2-2015/030879    WO-A2-2015/162206**
**JP-A- 2016 172 904**

• **PICAS J A ET AL: "Microstructure and wear resistance of WC-Co by three consolidation processing techniques", INTERNATIONAL JOURNAL OF REFRACTORY METALS AND HARD MATERIALS, ELSEVIER, AMSTERDAM, NL, vol. 27, no. 2, 1 March 2009 (2009-03-01), pages 344-349, XP025937893, ISSN: 0263-4368, DOI: 10.1016/J.IJRMHM.2008.07.002 [retrieved on 2008-07-11]**

• DAVYDOVA, A. ET AL.: 'Selective laser melting of boron carbide particles coated by a cobalt-based metal layer' JOURNAL OF MATERIALS PROCESSING TECHNOLOGY vol. 229, 21 September 2015, ISSN 0924-0136 pages 361 - 366, XP029332917

(52) Cooperative Patent Classification (CPC): (Cont.)

C-Sets
B22F 2999/00, B22F 1/10, C22C 1/05, B22F 1/148

## Description

### Technical Field

The present invention relates to an additive manufacturing material for powder rapid prototyping manufacturing. The present application claims priority to Japanese Patent Application No. 2015-250695 filed on 22 December 2015.

### Background Art

Additive manufacturing technique is to adhere materials to produce articles based on numerical representations (typically 3D CAD data) of three-dimensional shapes. Typically, additive manufacturing materials are bonded or sintered as a thin layer having a shape corresponding to a cross-section of an article to be manufactured and the thin layers are stacked, thereby manufacturing a desired three-dimensional shape. In additive manufacturing, resin products have been widely manufactured from resin materials because the handling thereof is easy. However, an improvement in powder rapid prototyping manufacturing (powder lamination) technique is recently sought which allows direct manufacturing of metal or cermet parts from powder materials containing metals and cermets without requiring moulds (for example, see Patent Literature 1 and 2).

Citation List

Non Patent Literature

Non Patent Literature 1: S. Kumar, J. MATER. PROCESS. TECHNOL 209 (2009) 3840-3848
Non Patent Literature 2: Reports from Kinki University Research Institute of Fundamental

Technology for Next Generation, Vol.2 (2011) 95-100
WO 2015/162206 discloses an additive manufacturing material for powder rapid prototyping manufacturing, the material comprising: a first powder containing a ceramic; and a second powder containing a metal.
Picas et al, "Microstructure and wear resistance of WC-Co by three consolidation processing techniques", in International Journal of Refractory Metals and Hard Materials, vol. 27, no. 2, (2009-03-01), pages 344-349, also discloses an additive manufacturing material for powder rapid prototyping manufacturing, the material comprising: a first powder containing a ceramic; and a second powder containing a metal.

### Summary of Invention

Technical Problem

Such powder materials containing metals and cermets generally have high melting point and mechanical strength compared to resin materials, and thus it is difficult to control bonding of particles that form powder. Therefore, in order to obtain manufactured articles with high quality, it is important to adjust properties of powder materials. For example, it is required for powder for lamination manufacturing to have uniform grain size and be formed with particles which are approximately true spheres and have low porosity (less pores) therein. However, articles manufactured with such conventional powder materials have issues of the relative density of less than 100% because voids are inevitable between particles that form the powder.
Specifically, when, for example, a metal part for which high relative density is not required in the whole region is manufactured by powder rapid prototyping manufacturing, the core in the metal part, for example, is manufactured to have low density and the shell at the surface is manufactured to have high density. In this case, the core having low density, for example, is manufactured with a heat source of a high-power laser so that the laminated thickness per scan is relatively high (such as about 90 $\mu$m) while the shell portion having high density is manufactured with a relatively low-power laser so that the laminated thickness per scan is low (such 30 $\mu$m or less).
Therefore, for production of parts required to have high density even at the central part thereof, it was required to repeatedly manufacture a thin laminate over an extremely long time. Alternatively, it was required to take means including increasing the relative density by infiltrating bronze into a porous manufactured article and increasing laser absorbance by coating a powder material with a laser absorbent.
The above problem may be more significant in manufacturing of parts containing ceramics generally having higher melting points than metals. Thus, at present, the relative density of powder rapid prototyping manufactured articles containing ceramics, for example, does not reach approximately 90% even when various manufacturing conditions and properties of powder materials are strictly adjusted.

With the foregoing in view, an object of the present invention is to provide a novel powder-shaped additive manufacturing material for powder rapid prototyping manufacturing that contains ceramic while allowing more efficient manufacturing of articles with high density.

Solution to Problem

In order to solve the above problem, the technique described herein provides an additive manufacturing material for powder rapid prototyping according to claim 1.

It has been commonly understood that one of the important requirements for conventional powder-shaped additive manufacturing materials is low porosity (less pores) of the additive manufacturing material in order to avoid formation of pores in manufactured articles. In contrast, the material described herein is attained in the form of granulated particles as described above. In other words, the first powder and the second powder form primary particles and the primary particles are bound to form secondary particles. Therefore, voids are inevitably formed between a plurality of primary particles. In other words, a plurality of primary particles is three-dimcnsionally bound through voids. By having such a shape, the additive manufacturing material is easily melted even when the material contains a ceramic, allowing manufacturing of dense manufactured articles.

The second particles containing a metal may melt with less energy to promote melting of the first powder. Further, because the first powder and the second powder are granulated, separation of a component derived from the first powder and a component derived from the second powder in a manufactured article may be suppressed. As a result of this, the additive manufacturing material described herein is also advantageous in that the material can provide a homogeneous manufactured article.

In a preferable embodiment of the technique described herein, the granulated particles have an average particle diameter of 1 $\mu$m or more and 100 $\mu$m or less. As a result of this, the additive manufacturing material having a size suitable for manufacturing machines in general use is provided.

In a preferable embodiment of the technique described herein, the first powder and the second powder have average particle diameters of 0.1 $\mu$m or more and 20 $\mu$m or less. As a result of this, the additive manufacturing material that is more easily melted and allows manufacturing of dense manufactured articles is provided. For example, the additive manufacturing material is provided that allows manufacturing of dense manufactured articles without a need for reduction of the laser scanning speed or even with an increased laser scanning speed.

In a preferable embodiment of the technique described herein, the first powder is a carbide ceramic. As a result of this, the affinity for the second powder is preferable and a homogeneous manufactured article may be manufactured.

In a preferable embodiment of the technique described herein, the first powder and the second powder are combined by sintering. As a result of this, scattering of powder may be suitably prevented and a reduction of manufacturing rate may be suppressed even when manufacturing is performed with, for example, a high-power laser.

In a preferable embodiment of the technique described herein, the first powder and the second powder are combined by a binder. As a result of this as well, a dense manufactured article may be manufactured. For example, a dense manufactured article may be suitably manufactured in powder rapid prototyping manufacturing in which melting is carried out with smaller energy.

The additive manufacturing material contains a ceramic as a constituent, and the ceramic is contained in the additive manufacturing material in the form of primary particles. Therefore, it is possible to manufacture dense manufactured articles by powder rapid prototyping manufacturing under common conditions. From such viewpoints, the technique described herein also provides a three-dimensional manufactured article of the additive manufacturing material.

In another aspect, the technique described herein also provides a method for manufacturing a three-dimensional manufactured article characterised in that the additive manufacturing material is used for three-dimensional manufacturing.

**Brief Description of Drawings**

[Fig. 1] Fig. 1 is a scanning electron microscope (SEM) image of an additive manufacturing material according to one embodiment.

[Fig. 2] Fig. 2 is a schematic cross-sectional view illustrating a machine on which powder rapid prototyping manufacturing is performed.

[Fig. 3] Fig. 3 is a scanning electron microscope (SEM) image of an additive manufacturing material according to another embodiment.

[Fig. 4] Fig. 4 shows cross-sectional SEM images of manufactured articles according to (a) Comparative Example and (b) Example.

**Description of Embodiments**

Preferable embodiments of the present invention are described hereinafter. The matters that are necessary for practise of the present invention and are other than those specifically described in the present specification are understood and practised by a person skilled in the art on the basis of the teachings on practise of the invention described herein and common technical knowledge as of filing in the art. The dimensional ratios in the drawings are exaggerated for convenience of description and may be different from actual ratios. As used herein, the term "X to Y" indicating a range means "X or more and Y or less", and the terms "weight" and "mass", "% by weight" and "% by mass" and "part(s) by weight" and "part(s) by mass" are respectively interchangeably used.

(Additive manufacturing material)

The "additive manufacturing material" described herein is a powder-shaped material for powder rapid prototyping manufacturing. The term "powder rapid prototyping manufacturing" broadly encompasses various manufacturing processes using powder-shaped materials as materials of manufactured articles in the art of additive manufacturing. The powder rapid prototyping manufacturing specifically encompasses, for example, methods referred to as binder jetting, directed energy deposition typically including laser clad welding, electron beam clad welding and arc welding, powder bed fusion typically including laser sintering, selective laser sintering (SLS) and electron beam sintering. It is more preferable that the additive manufacturing material is used for directed energy deposition and powder bed fusion from the viewpoint that the material is suitable for manufacturing of dense manufactured articles.

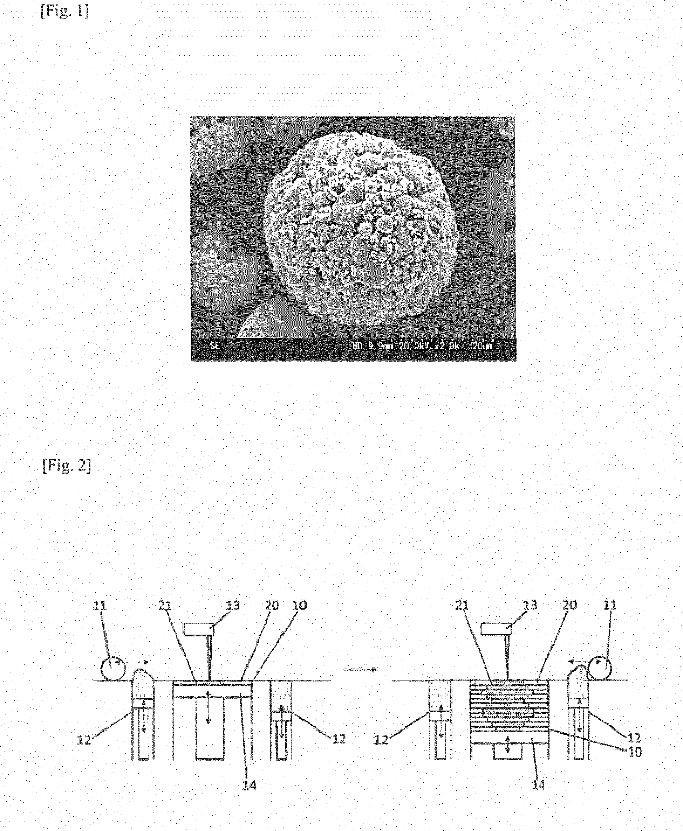

The additive manufacturing material described herein contains a first powder containing a ceramic and a second powder containing a metal. The first powder and the second powder form granulated particles. Fig. 1 is a scanning electron microscope (SEM) image illustrating an embodiment of the additive manufacturing material. In this example, relatively rounded and large particles are metal powder (second powder) and relatively small particles are ceramic powder (first powder). The additive manufacturing material may be recognised as if the first powder and the second powder form primary particles and the granulated particles form secondary particles. In such an additive manufacturing material, primary particles may be desorbed from granulated particles. Therefore, it goes without saying that inclusion (such as at 10% by mass or less) of primary particles of the first powder and second powder is allowed.

(First powder)

The first powder substantially contains a ceramic. The first powder contains a ceramic as a main component. The term main component in this context means a component that accounts for 70% by mass or more of the first powder. Preferably 80% by mass or more, more preferably 90% by mass or more and particularly preferably 95% by mass or more (typically 98% by mass or more) of the first powder is formed with ceramic. Components other than the ceramic in the first powder include resins, inorganic materials other than the ceramic and metals. Components other than the ceramic are not particularly limited and may be, for example, metal components described hereinbelow. The components are considered to be combined (complexed) with the ceramic to form the first powder.

The ceramic may be, for example, a ceramic material formed from any metal oxide (oxide ceramic) or a ceramic material formed from a non-oxide such as a carbide, a boride, a nitride and apatite.

The oxide ceramic may be any metal oxide without particular limitation. The metal element that forms the oxide ceramic may be one or two or more selected from metalloid elements such as boron (B), silicon (Si), germanium (Ge), antimony (Sb) and bismuth (Bi); representative elements such as magnesium (Mg), calcium (Ca), strontium (Sr), barium (Ba), zinc (Zn), aluminium (Al), gallium (Ga), indium (In), tin (Sn) and lead (Pb); transition metal elements such as scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), iron (Fe), cobalt (Co), nickel (Ni), copper (Cu), silver (Ag) and gold (Au); and lanthanoid elements such as lanthanum (La), cerium (Ce), praseodymium (Pr), neodymium (Nd), samarium (Sm), europium (Er) and lutetium (Lu). Among others, it is preferable that the metal element is one or more elements selected from Mg, Y, Ti, Zr, Cr, Mn, Fe, Zn, Al and Er.

More specifically, examples of the oxide ceramic include alumina, zirconia, yttria, chromia, titania, cobaltite, magnesia, silica, calcia, ceria, ferrite, spinel, zircon, nickel oxide, silver oxide, copper oxide, zinc oxide, gallium oxide, strontium oxide, scandium oxide, samarium oxide, bismuth oxide, lanthanum oxide, lutetium oxide, hafnium oxide, vanadium oxide, niobium oxide, tungsten oxide, manganese oxides, tantalum oxide, terpium oxide, europium oxide, neodymium oxide, tin oxide, antimony oxide, antimony-containing tin oxide, indium oxide, tin-containing indium oxide, zirconium aluminate oxide, zirconium silicate oxide, hafnium aluminate oxide, hafnium silicate oxide, titanium silicate oxide, lanthanum silicate oxide, lanthanum aluminate oxide, yttrium silicate oxide, titanium silicate oxide, tantalum silicate oxide and the like.

Examples of the non-oxide ceramic include carbides such as tungsten carbide, chromium carbide, vanadium carbide, niobium carbide, molybdenum carbide, tantalum carbide, titanium carbide, zirconium carbide, hafnium carbide, silicon carbide and boron carbide; borides such as molybdenum boride, chromium boride, hafnium boride, zirconium boride, tantalum boride and titanium boride; nitrides such as boron nitride, titanium nitride, silicon nitride and aluminium nitride; complexes such as forsterite, steatite, cordierite, mullite, barium titanate, lead titanate, lead zirconate titanate, Mn-Zn ferrite, Ni-Zn ferrite and sialon; phosphate compounds such as hydroxyapatite and calcium phosphate; and the like.

The above ceramic may contain any element that is doped or substituted. The first powder may contain only one ceramic or two or more ceramics in combination. When the first powder contains two or more ceramics, some or all of the ceramics may form complexes. Examples of the complexed ceramics include, specifically, yttria-stabilised zirconia, partially stabilised zirconia, gadolinium-doped ceria, lanthanum-doped lead zirconate titanate and sialon and complexed oxides described above. By using the first powder formed from the complex, a manufactured article containing the complex may be manufactured.

(Second powder)

The second powder substantially contains a metal. The second powder contains a metal as a main component. The term main component in this context means a component that accounts for 70% by mass or more of the second powder. Preferably 80% by mass or more, more preferably 90% by mass or more and particularly preferably 95% by mass or more (typically 98% by mass or more) of the second powder is formed with metal. Components other than the metal in the second powder include resins and inorganic materials such as ceramics and glass. The components are considered to be combined (complexed) with the metal to form the second powder.

The metal is an elemental substance or an alloy of one or more elements. Examples of the metal substance are magnesium (Mg), aluminium (Al), titanium (Ti), chromium (Cr), manganese (Mn), iron (Fe), cobalt (Co), nickel (Ni), copper (Cu), zinc (Zn), zirconium (Zr), gold (Au), silver (Ag), platinum (Pt), iridium (Ir), bismuth (Bi), niobium (Ni), molybdenum (Mo), tin (Sn), tungsten (W) and lead (Pb).

Examples of the alloy include copper alloys typically including Cu-Al alloy, Cu-Al-Fe alloy, Cu-Ni alloy and Cu-Ni-In alloy; nickel alloys typically including Ni-Al alloy, Ni-Cr alloy (such as Ni-20Cr alloy, Ni-50Cr alloy and Inconel), Ni-Cr-Fe alloy (such as Incoloy), Ni-Cr-Al alloy, Hastelloy (Ni-Fe-Mo alloy, Ni-Cr-Mo alloy) and Ni-Cu alloy (such Monel); cobalt alloys containing cobalt as a main component and typically including Co-Cr-W alloy (such as Stellite), Co-Cr-Ni-W-C alloy, Co-Mo-Cr-Si alloy and Co-Cr-Al-Y alloy; Ni self-fluxing alloys typically including Ni-Cr-Fe-Si-B-C alloy and Ni-Cr-Mo-Cu-Fe-Si-B-C alloy; Co self-fluxing alloys typically including Co-Ni-Cr-Mo-Fe-Si-B-C; low-carbon steels typically including martensite-age hardened steel; carbon steels; stainless steels typically including SUS304, SUS316, SUS410, SUS420J2 and SUS43 1; titanium alloys typically including Ti-6Al-4V; and the like. The term alloy as used herein means to encompass substances that are formed from the above metal element and one or more other elements and exhibit metallic properties, and the way of mixing thereof may be any of solid solution, intermetallic compound and mixtures thereof.

The second powder may contain any one metal or alloy mentioned above or two or more thereof in combination.

(Form of granulated particles)

The additive manufacturing material described herein is formed as an aggregate of granulated particles in the form of secondary particles as described above. The term "granulated particles" as used herein refers to a particle-like substance (showing the form of a particle) in which primary particles are three-dimensionally bound to be combined and behave as one particle. The term "binding" as used herein means two or more primary particles are linked directly or indirectly. The binding includes, for example, binding of primary particles through chemical reaction, binding of primary particles attracted by simple adsorption, binding that exploits an anchor effect of an adhesive material and the like filling the unevenness on the surface of primary particles, binding of primary particles that exploits an attractive effect by static electricity, binding of primary particles by fusion or sintering of the surfaces thereof resulting in combining, binding by a binder (adhesive) and the like.

Such an additive manufacturing material is attained by, for example, the form of granular particles (sometimes also simply referred to as granulated particles), granulated sintered particles (hereinafter sometimes also simply referred to as "granulated sintered particles", in contrast to the granulated particles which are granular particles) in which individual particles that form granular particles (granulated particles) are sintered, coated fine particles comprising fine particles bound on the periphery of core particles or the like. From viewpoints of attaining the additive manufacturing material particularly suitable for three-dimensional manufacturing having excellent flowability, granulated particles or granulated sintered particles are preferred. Further, granulated sintered particles are more preferred which hardly cause scattering of the additive manufacturing material even when irradiated with an energy source such as a laser with high intensity.

In such an additive manufacturing material, there may be voids between particles (typically primary particles) that form the first powder and particles (typically primary particles) that form the second powder. Such voids may be understood to be pores in the granulated particles that form the additive manufacturing material. Because of this, the additive manufacturing material is advantageous as it is prone to receive energy from an energy source (heat source) and is prone to be dissolved. As a result, voids between primary particles are easily eliminated and a dense manufactured article having a high degree of hardness that is close to a sintered compact (bulk material) produced by using, for example, a casting mould may be obtained.

Particularly, the additive manufacturing material contains not only the first powder containing a ceramic but also the second powder containing a metal that has a melting point generally lower than ceramics. As a result of this, in the additive manufacturing material, the second powder melts first and then the molten liquid of the second powder may wet and spread on the surface of the first powder, thereby promoting melting of the first powder. Alternatively, the second powder may incorporate the first powder dispersed in the matrix obtained by melting the second powder, thereby providing a dense manufactured article that includes the ceramic phase dispersed in the metal phase.

The proportion of the second powder relative to the sum of the first powder and the second powder exceeds 15% by mass. As a result of this, the second powder may suitably wet and spread on the surface of the first powder of which sufficient melting is difficult, thereby allowing dense manufacturing. The proportion of the second powder may be appropriately adjusted according to the properties of the desired manufactured article. For example, the proportion is preferably 20% by mass or more. However, an extreme excess of the second powder is not preferable because the characteristics of the first powder containing a ceramic may be deteriorated. Therefore, the proportion of the second powder relative to the sum of the first powder and the second powder is defined to be less than 90% by mass. Although the proportion of the second powder may be appropriately adjusted according to the properties of the desired manufactured article, the proportion is preferably 85% by mass or less, more preferably 80% by mass or less and particularly preferably 75% by mass or less.

Moreover, the powder material conventionally used for powder rapid prototyping manufacturing having a small average particle diameter (such as 20 $\mu$m or less) tends to have an increased resistance to flow and thus a decreased flowability because of an increased impact by the contact area between particles that form powder. In contrast, the additive manufacturing material described herein is formed with primary particles in the form of secondary particles even if the primary particles have a low average particle diameter, and thus may have preferable flowability according to the average particle diameter of secondary

The additive manufacturing material is granulated powder, and thus voids are inevitably formed between particles that form the first powder and particles that form the second powder. Typically, there are sufficient voids provided between individual primary particles that form granulated particles. The term "void" in this context means a space that is larger than a space that is inevitably formed when, for example, primary particles are close-packed. The "void" may be a space that is 1.1 times or more (such as 1.2 times) of a space that is inevitably formed when primary particles are close-packed. The void may be observed with, for example, a specific surface area and pore distribution analyser and the like.

By configuring the average particle diameter of the primary particles to be minute, the additive manufacturing material may be, for example, softened or melted at a temperature lower than the melting point of secondary particles *per se* that form the additive manufacturing material. This is a completely new finding that has not been predicted. Thus, the additive manufacturing material may be softened or melted with, for example, lower laser output than that was conventionally required in powder rapid prototyping manufacturing, enabling a reduction of the process cost. In addition, because of an increased softening or melting efficiency of secondary particles, a dense three-dimensional manufactured article having low porosity may be prepared. As a result of this, a three-dimensional manufactured article that has properties close to, for example, a bulk of the additive manufacturing material may be prepared.

(Average particle diameter of the additive manufacturing material)

The additive manufacturing material may have any average particle diameter without particular limitation and may have a size that is suitable for the specification of, for example, a powder rapid prototyping manufacturing machine used. For example, the size may be suitable for supply of the additive manufacturing material during powder rapid prototyping manufacturing. The upper limit of the average particle diameter of the additive manufacturing material may be, for example, above 100 $\mu$m when configuring the diameter to be higher. Typically, the upper limit may be 100 $\mu$m or less, preferably 75 $\mu$m or less, more preferably 50 $\mu$m or less and still more preferably 40 $\mu$m or less. When the additive manufacturing material has a decreased average particle diameter, the filling rate of the additive manufacturing material in, for example, the manufacturing area may increase. As a result, the density of the three-dimensional manufactured article may be suitably increased. In addition, the surface roughness (Ra) of the three-dimensional manufactured article may be decreased and an effect of improving dimension accuracy may also be obtained. Further, the additive manufacturing material of the present invention includes voids, and thus there is also an advantage of improving the solidification efficiency when the adhered additive manufacturing material is solidified during lamination manufacturing.

The lower limit of the average particle diameter of the additive manufacturing material is not particularly limited as far as the flowability of the additive manufacturing material is not affected. The lower limit may be, but is not limited to, for example 10 $\mu$m or less, 5 $\mu$m or less and the like when configuring the diameter to be lower. However, as the additive manufacturing material described herein has the form of secondary particles, and thus it is not always necessary to reduce the average particle diameter. Therefore, when the handling during formation of the additive manufacturing material and the flowability of the additive manufacturing material are taken into account, the lower limit of the average particle diameter may be 1 $\mu$m or more, suitably 5 $\mu$m or more, preferably 10 $\mu$m or more and more preferably, for example, 20 $\mu$m or more. When the additive manufacturing material has an increased average particle diameter, the additive manufacturing material may have increased flowability. As a result, the additive manufacturing material may be preferably supplied to a manufacturing machine and the prepared three-dimensional manufactured article may have a preferable finish, and thus it is preferable.

Generally, fine powder materials having an average particle diameter of, for example, less than about 10 $\mu$m have difficulty in control of the particle shape and have decreased flowability in conjunction with an increased specific surface area. Therefore, when such a powder material is used for powder rapid prototyping manufacturing, it may often be difficult to planarize the powder material during supply thereof. Further, the powder material scatters due to the small mass thereof, and thus handling thereof may be difficult. In contrast, the additive manufacturing material described herein is formed with secondary particles obtained by binding more than one primary particle having low average particle diameter. The primary particles bind each other, and thus may have a three-dimensional shape with inevitable voids. As a result of this, it is possible to increase the weight of one particle while maintaining the form of primary particle. In addition, as described above, the concentration of components in the additive manufacturing material may be kept uniform even though the additive manufacturing material contains the first powder and the second powder having different composition from the first powder. As a result of this, it is possible to provide a novel additive manufacturing material for powder rapid prototyping manufacturing that has both advantages resulting from secondary particles having low average particle diameter and using secondary particles having high average particle diameter.

(Average particle diameter of primary particles)

Meanwhile, in the additive manufacturing material described herein, the first powder and the second powder that form secondary particles preferably have average particle diameters of, for example, 20 $\mu$m or less (less than 20 $\mu$m), more preferably 10 $\mu$m or less (less than 10 $\mu$m) and for example 10 $\mu$m or less. By reducing the average particle diameter of primary particles, it is possible to prepare a denser and finer three-dimensional manufactured article. The first powder and the second powder may have average particle diameters of, for example, I nm or more, more preferably 200 nm or more, and for example 500 nm or more. By reducing the average particle diameter of primary particles, it is possible to prepare a denser and finer three-dimensional manufactured article.

Generally, the first powder has higher melting point than the second powder and thus is less melted. Therefore, from the viewpoint of forming an additive manufacturing material that is more suitable for manufacturing, a preferable embodiment may be such that the average particle diameter $D_1$ of the first powder is lower than the average particle diameter $D_2$ of the second powder. The average particle diameter $D_1$ of the first powder and the average particle diameter $D_2$ of the second powder fulfil $D_1 \leq 0.5 \times D_2$. For example, $D_1 \leq 0.3 \times D_2$ may be configured. Alternatively, the average particle diameter $D_1$ of the first powder and the average particle diameter $D_2$ of the second powder may be preferably such that $0.05 \times D_2 \leq D_1$, more preferably $0.07 \times D_2 \leq D_1$ and particularly preferably $0.1 \times D_2 \leq D_1$.

The "average particle diameter" of the additive manufacturing material as used herein means, unless otherwise stated, a particle diameter at 50% of the cumulative value (50% volume average particle diameter; $D_{50}$) in the particle size distribution based on the volume as measured on a particle size distribution analyser based on the laser diffraction/scattering method. However, for a group of particles having an average particle diameter of, for example, less than 1 $\mu$m, the average particle diameter may be measured on the basis of the dynamic light scattering or electron microscopy. In this case, the average particle diameter as used herein is typically an arithmetic average of diameters corresponding to circles determined for planar view images (such as secondary electron images) of 100 or more particles observed by an observation means such as an electron microscope.

The "average particle diameter" of primary particles (the first powder and the second powder bound together) that form the additive manufacturing material may be, for example, a value calculated as a diameter (diameter corresponding to a sphere) of spherical particles calculated from the specific surface area. The average particle diameter of the primary particles (Dave) may be determined on the basis of the following equation: Dave = 6/($\rho$Sm), wherein Sm is the specific surface area and p is the density of the entire additive manufacturing material. The density $\rho$ of the additive manufacturing material may be a value (weighted sum) obtained by calculating the compositions and proportions of the first powder and the second powder by the compositional analysis or the like of the additive manufacturing material and summing densities of materials that form the first powder and the second powder according to the compositional proportions thereof.

The specific surface area may be a value, for example, calculated according to the BET method from the amount of gas adsorbed such as $N_2$ measured according to the continuous flow method on a specific surface area analyser (produced by Micromeritics Instrument Corp., FlowSorb 11 2300). The specific surface area may be measured according to the "Determination of the specific surface area of powders (solids) by gas adsorption-BET method" under JIS Z 8830:2013 (IS09277:2010).

<Specific surface area>

The specific surface area of the additive manufacturing material is not particularly limited; however, it is preferably, for example, above 0.1 m²/g. Namely, it is preferable that the additive manufacturing material is mainly formed with secondary particles having a (extremely) high specific surface area. Specifically, as, for example, silica ($SiO_2$) has a specific gravity of 2.2 g/ml, a true sphere silica particle having a radius of r m has a specific surface area of $1.36/r \times 10^{-6}$ m²/g. Accordingly, for example, a true sphere silica particle having a radius of 30 $\mu$m has a specific surface area of 0.045 m²/g. Further, as $\alpha$ alumina ($Al_2O_3$) has a specific gravity of 3.98 g/ml, a true sphere alumina having a radius of r m has a specific surface area of $0.75/r \times 10^{-6}$ m²/g. Accordingly, a true sphere alumina particle having a radius of 30 $\mu$m has a specific surface area of 0.025 m²/g. Further, when commercially available molten and ground fine alumina powder is measured according to the "Determination of the specific surface area of powders (solids) by gas adsorption-BET method" under JIS Z 8830:2013 (IS09277:2010), the result is about 0.1 m²/g. In contrast, the additive manufacturing material described herein preferably has a specific surface area of 0.1 m²/g or more. Because of such an increased specific surface area, the additive manufacturing material described herein may have such a shape (structure) that the surface conformation is three-dimensionally intricate and complex. Namely, it is possible to significantly reduce the substantial dimension (such as the thickness of the surface unevenness) without being restrained by the average particle diameter of the additive manufacturing material *per se.* Accordingly, by having such an extremely high specific surface area, a ceramic material having high melting point may effectively absorb the heat from a heat source of relatively low temperature such as a laser to achieve sufficient softening and melting. As a result, it is possible to provide an additive manufacturing material that allows efficient preparation of a three-dimensional manufactured article containing a ceramic.

Moreover, lamination may be achieved with heat at relatively low temperature, and thus lamination manufacturing at a temperature that may suppress grain growth may be achieved. In addition, the composition of the additive manufacturing material is hardly varied by heat even with secondary particles containing an element having a low melting point. Therefore, it is possible to conveniently control the composition of the prepared three-dimensional manufactured article. Thus, although the specific surface area of the secondary particles is not particularly limited, it is desirable that the specific surface area is high and is preferably 0.1 m²/g or more.

<Range of grain size>

It is preferable that the range of grain size of the additive manufacturing material is appropriately selected according to the type of the machine and conditions used for powder rapid prototyping manufacturing. For example, specifically, the range of grain size of the additive manufacturing material may be appropriately adjusted so as to be 5 to 20 $\mu$m, 45 to 150 $\mu$m, 5 to 75 $\mu$m, 32 to 75 $\mu$m, 15 to 45 $\mu$m, 20 to 63 $\mu$m or 25 to 75 $\mu$m.

The range of grain size of the additive manufacturing material represents the size (particle diameter) and proportion (relative particle amount provided that the entire additive manufacturing material is regarded as 100% by volume) of particles contained in the group of particles that forms the additive manufacturing material. The "range of grain size" is an index of the width (extent) from the lower limit to the upper limit of diameters of particles in the additive manufacturing material. The lower limit of the range of grain size as used herein means that the proportion of particles having particle diameters at or lower than the value in the additive manufacturing material is 5% or less. The upper limit of the range of grain size means that the proportion of particles having particle diameters at or above the value in the additive manufacturing material is 5% or less. The grain size distribution of the additive manufacturing material may be measured on a suitable grain size distribution analyser according to the grain size of the additive manufacturing material. For example, the grain size distribution may be determined on, for example, a RO-TAP tester (see JIS R 6002) or an analyser employing laser diffraction/scattering. For example, the additive manufacturing material having, for example, a range of grain size of 5 to 75 $\mu$m means that the proportion of particles having particle diameters of 5 $\mu$m or less is 5% or less and the proportion of particles having particle diameters of 75 $\mu$m or more is 5% or less.

<Circularity>

It is further preferable that the additive manufacturing material described herein has an average circularity of less than 1.5 (such as 1 or more and less than 1.5). The average circularity is employed as an index that may indirectly represent an average sphericity of granulated particles (secondary particles) that form the additive manufacturing material and means an average circularity when the secondary particles are viewed as a plane from an arbitrary direction. Therefore, the average circularity does not necessarily intend to mean that the secondary particles are close to a two-dimensional true circle but to mean that the secondary particles are substantially close to a three-dimensional true sphere.

Particularly, the additive manufacturing material contains the first powder containing a ceramic. Generally, a ceramic without spheroidization treatment has high crystallinity and thus tends to provide the shape of particles that is the same as the external shape of the crystal system. Among others, ceramic particles which are a ground material have strong tendency as above because the particles are crushed along the crystal planes. In addition, ceramic particles can, even when the particles do not exhibit the external shape of the ideal crystal system, exhibit the shape close to polyhedrons which are combinations of specific crystal planes as an external shape thereof. Therefore, when first powder formed from secondary particles containing a ceramic that has edges, corners (which may be vertices) and angular parts originating from the crystal system is used as it is, the flowability tends to decrease. Namely, secondary particles containing a ceramic may interlock each other during supply to the manufacturing area to make planarization difficult.

In contrast, the additive manufacturing material contains, in addition to the first powder containing a ceramic, the second powder containing a metal. In addition, because of being in the form of secondary particles, the external shape is close to a true sphere and thus there is less effect by, for example, crystal planes, edges, corners or angular parts that reflect the crystallinity of the ceramic that forms the particles. As a result of this, the additive manufacturing material may have a significantly increased flowability even though the additive manufacturing material contains a ceramic. In other words, in the additive manufacturing material described herein, the first powder may be in the form to which high crystallinity of the ceramic is reflected, and even when the first powder has the external shape of, for example, prism or mass, high flowability may be secured if the above average circularity is satisfied. The average circularity may be an index that may reflect the average sphericity that may not be represented by an index such as the average aspect ratio. Accordingly, the average circularity of the additive manufacturing material of which flowability is increased in a planarization step of powder rapid prototyping manufacturing is preferably as close to I as possible and may be 1 or more. The average circularity is preferably 2.7 or less, more preferably 2.0 or less, 1.5 or less and may be, for example, 1.2 or less.

The "circularity" of the additive manufacturing material as used herein means an arithmetic average of circularities determined for planar view images (such as secondary electron images) of 100 or more secondary particles observed by an observation means such as an electron microscope. The circularity is defined according to the following equation based on the boundary length which corresponds to the length of the contour of a secondary particle and the area surrounded by the contour in the planar view image of the secondary particle. The circularity is an index that tends to reflect the surface shape smoothness of secondary particles, and geometrical circle (true circle) has a circularity of 1 and as the shape departs from true circle, the circularity becomes higher than 1. The average circularity may be determined by, for example, analysing an electron microscopic image obtained at an appropriate magnification on an image processing software or the like.

$$\text{Circularity} = (\text{Boundary length})^2 / (4 \times \pi \times \text{Area})$$

<Aspect ratio>

With regard to the external shape of the additive manufacturing material, it is more preferable that the average aspect ratio in the planar view is less than 1.4. As described above, in secondary particles having an average circularity closer to 1, the circularity may reflect the surface shape rather than the shape of the whole secondary particles. In other words, when evaluating secondary particles close to a true circle, the circularity tends to increase beyond the extent of change in the external shape of whole secondary particles if the contour of the secondary particle in the planar view becomes complicated at the micro level. Therefore, by defining the external shape of secondary particles by the aspect ratio in addition to the circularity, secondary particles may be obtained of which external shape as a whole is close to a true sphere, namely close to a true circle in the planar view.

The average aspect ratio is, by taking the flowability of the additive manufacturing material into account, preferably 1.5 or less and more preferably 1.3 or less. The average aspect ratio may be, for example, 1.15 or less and desirably 1 or close to 1.

The "aspect ratio" as used herein means an arithmetic average of aspect ratios determined for planar view images (such as secondary electron images) of 100 or more secondary particles observed by an observation means such as an electron microscope. The aspect ratio may be defined by a/b, wherein a is the length of the long axis and b is the length of the short axis of the ellipse corresponding to the secondary particle. The ellipse corresponding to the secondary particle means an ellipse that has the same area and the same first-order and second-order moments as the secondary particle. The average aspect ratio may be determined by, for example, analysing an electron microscopic image obtained at an appropriate magnification on an image processing software or the like.

<Fractal dimension>

It is also a preferable embodiment in which the additive manufacturing material has an average fractal dimension of less than 1.5. Such secondary particles may have surface shapes that are complex at the micro level. Therefore, by defining the complex surface shape of the particles by a variety of indices, the additive manufacturing material may be obtained of which external shape is further close to a true sphere. The fractal dimension is an index that is widely and generally used in order to measure a complex surface shape of each particle, and the average fractal dimension may be a suitable index for measuring the surface smoothness of the additive manufacturing material described herein. By defining the average fractal dimension to be less than 1.5, the additive manufacturing material having a further improved flowability may be attained. The average fractal dimension is preferably 1.1 or less and more preferably 1.05 or less when the flowability of the additive manufacturing material is taken into account.

The "fractal dimension" as used herein means an arithmetic average of fractal dimensions determined for planar view images (such as secondary electron images) of 100 or more secondary particles observed by an observation means such as an electron microscope. The fractal dimension as used herein is a value determined according to the divider method and is defined as a slope of a linear portion of the function connecting the boundary length and logarithm of the stride length of a secondary particle in a planar view image of the secondary particle. The measured value of the fractal dimension is a value of 1 (= solid line) or more and less than 2 (= plane) and the value closer to 1 means that the secondary particle has a smoother surface. The average fractal dimension may be determined by, for example, analysing an electron microscopic image obtained at an appropriate magnification on an image processing software or the like.

<Repose angle>

It is also a preferable embodiment in which the additive manufacturing material described herein has a repose angle of less than 39 degrees. The repose angle is one of the indices that have been conventionally and widely used to represent the flowability of powder. The repose angle may also be an index that may practically reflect spontaneous flowability during, for example, transport of the additive manufacturing material through a supplying machine and a manufacturing machine. Therefore, by defining the repose angle to be low, the additive manufacturing material having high flowability may be attained. As a result of this, the additive manufacturing material may allow preparation of a homogeneous three-dimensional manufactured article with preferable productivity.

The repose angle is preferably 36 degrees or less and more preferably 32 degrees or less when the flowability of the additive manufacturing material is taken into account. The repose angle may further be, for example, 30 degrees or less. The lower limit of the repose angle is not particularly limited. However, when the repose angle is too low, the additive manufacturing material may easily be scattered or the control of the supply quantity of the additive manufacturing material may be difficult. Therefore, the repose angle of 20 degrees or more may be exemplified as an approximate target.

<Flow function>

Without particular limitation, it is preferable that the additive manufacturing material described herein has a flow function of 5.5 or more.

The above repose angle is an index that allows evaluation of flowability of the additive manufacturing material under no load. In contrast, the flow function is to evaluate the flowability of the additive manufacturing material by measuring the shear stress while sealing and pressurising the additive manufacturing material and may be an index that may practically represent the handleability of the additive manufacturing material. Therefore, according to the above configuration, the additive manufacturing material having an average particle diameter of, for example, less than 30 $\mu$m may be considered to have high flowability, and the additive manufacturing material that allows preparation of a three-dimensional manufactured article with higher productivity may be provided.

<Compression strength>

The lower limit of the compression strength of the secondary particles that form the additive manufacturing material is not limited in a narrow sense. For the additive manufacturing material for powder rapid prototyping manufacturing in which a heat source used is a laser, the compression strength is preferably in the range of the compression strength of granulated sintered ceramic particles for general additive manufacturing materials. The compression strength of the secondary particles that form the additive manufacturing material is preferably 1 MPa or more, more preferably 10 MPa or more, still more preferably 100 MPa or more and particularly preferably 1000 MPa or more. When the secondary particles have an increased compression strength, the secondary particles that form the additive manufacturing material may have an increased ability of shape retention and the secondary particles may be prevented from collapsing. As a result, the material powder may be stably supplied to the manufacturing area.

The upper limit of the compression strength of the secondary particles that form the additive manufacturing material is not particularly limited as far as it is in the range of the compression strength of secondary particles used for general powder materials, and is preferably 3000 MPa or less, more preferably 2500 MPa or less and still more preferably 2000 MPa or less. When the secondary particles have a decreased compression strength, the manufacturing efficiency of the additive manufacturing material increases.

The "compression strength" of granulated particles that form the additive manufacturing material as used herein may be the fracture strength measured on an electromagnetic force loading compression tester. Specifically, one granulated particle is fixed between a pressure indenter and a pressure plate and a compression load by electromagnetic force is applied with a constant increment between the pressure indenter and the pressure plate. Compression is performed with a constant loading rate and the displacement of the measurement sample is measured. By processing the result of the displacement property of the measured sample on a dedicated programme, the compression strength (fracture strength) of the granulated particle may be calculated. In the present specification, 10 or more granulated particles that form the additive manufacturing material are measured on a micro compression testing machine (produced by Shimadzu Corporation, MCT-500), and the arithmetic average of the measured fracture strengths is used as the compression strength of granulated particles. With respect to each granulated sintered particle, specifically, the compression strength $\sigma$ [MPa] of the granulated sintered particle is calculated from the following equation: $\sigma = 2.8 \times L/\pi/d^2$, wherein L [N] represents the critical load obtained by the compression test and d [mm] represents the average particle diameter.

(Production method of the additive manufacturing material)

The production method of the additive manufacturing material according to the present embodiment is not particularly limited as far as primary particles are three-dimensionally bound. For example, productions of the additive manufacturing material by granulation method and granulation/sintering method are hereinafter described as suitable examples. However, the production method of the additive manufacturing material described herein is not limited thereto.

(Granulation method)

The granulation method is a process for granulating starting material particles (which may be the first powder and the second powder) into the form of secondary particles. Any well-known various processes may be appropriately used as the granulation method. For example, the granulation method may be performed by using granulation method such as dry granulation and wet granulation. Specific examples include tumbling granulation, fluidized bed granulation, agitating granulation, crushing granulation, melt granulation, spray granulation, microemulsion granulation and the like. Among others, spray granulation is a suitable granulation method.

According to the spray granulation, the additive manufacturing material may be produced, for example, according to the following procedures. Thus, a first powder and a second powder having desired compositions and dimensions are first prepared. The surfaces thereof may be stabilised with a protecting agent and the like, if necessary. The thus stabilised starting material powder particles are dispersed in an appropriate solvent together with, for example, a binder (and optionally spacer particles containing an organic material) and the like, thereby preparing a spray liquid. The starting material particles may be dispersed in the solvent by using, for example, a mixer or a dispersing machine such as a homogenizer and an agitator with blades. The spray liquid is then sprayed from an ultrasonic sprayer and the like to form droplets. The droplets on, for example, a gas flow are allowed to pass through a continuous oven to remove the solvent component and dry. Accordingly, the additive manufacturing material in which the first powder and the second powder are three-dimensionally bound together may be obtained. In this way, voids may be formed between individual primary particles that form granulated particles.

(Granulation/sintering method)

In the granulation/sintering method, the starting material particles which are the first powder and the second powder are granulated into the form of secondary particles followed by sintering in order to firmly bind (sinter) the starting material particles together. In the granulation/sintering method, it is suitable that droplets which are ultrasonically sprayed in the above granulation are dried and then sintered while passing though the continuous oven on a gas flow. Specifically, while transporting the ultrasonically sprayed droplets through the continuous oven, the solvent component is removed by drying in a low-temperature zone provided at relatively upstream of the oven and then the droplets are sintered in a high-temperature zone provided at relatively downstream of the oven. The granulated starting material particles are sintered at mutual contact points and sintered while almost maintaining the granulated shape. The binder is eliminated during sintering. Accordingly, the additive manufacturing material formed from particles in the form of secondary particles in which primary particles are bound (sintered) may be obtained.

In the granulation method and granulation/sintering method, granulated particles may be prepared by using spacer particles in addition to the starting material particles. When sprayed droplets are dried, the starting material particles and the binder are in the uniformly mixed state and the starting material particles are bonded by the binder to form mixed particles. Therefore, in the system in which spacer particles are used together with the starting material particles, the starting material particles and the spacer particles in the uniformly mixed state are bonded by the binder to form mixed particles. When the mixed particles are sintered, the binder (and the spacer particles) is eliminated (bums off) and the starting material particles are sintered. As a result of this, secondary particles in the form of primary particles bound through sufficient voids are formed.

Upon sintering, some of the starting material particles may form, depending on the composition or size thereof, a liquid phase to contribute to the binding with other particles. Therefore, primary particles may have a bigger average particle diameter than the starting material, namely starting material particles. Thus, primary particles in the additive manufacturing material, namely the first powder and the second powder may have almost the same dimensions and shapes as starting material particles or may be those obtained by growth/binding of starting material particles by sintering. From drying to sintering, components other than starting material particles may be eliminated and the starting material particles may shrink due to sintering, and thus the obtained granulated particles (secondary particles) may have a significantly smaller average particle diameter than droplets. The average particle diameters of the secondary particles and primary particles and the size and proportion of voids formed between the primary particles may be appropriately designed according to the form of desired secondary particles. However, it is considered that granulated particles which are completely devoid of voids between primary particles can hardly exhibit the effect of the granulated particles within the meaning of the invention described herein. Therefore, in the invention described herein, granulated particles have pores (open pores) connected to at least the outside.

In the production step, it is preferable that, but is not limited to, the prepared spray liquid contains starting material particles at a concentration of 10% by mass to 40% by mass. Examples of the binder to be added include carboxymethylcellulose, polyvinylpyrrolidone, polyvinylpyrrolidone and the like. The binder added is preferably prepared at a proportion of 0.05% by mass to 10% by mass relative to the mass of the starting material particles. The sintering environment may be, but is not limited to, in the atmosphere, under vacuum or in an inert gas atmosphere and it is preferable to sinter at a temperature of 600°C or higher and 1700°C or lower. When, particularly, spacer particles containing an organic material and the like, a binder and the like are used, sintering may be performed in an atmosphere containing oxygen for the purpose of removing the organic material in the granulated particles. The produced secondary particles may be disintegrated or classified, if necessary.

(Production method of three-dimensional manufactured article)

The thus obtained additive manufacturing material may be applied to various types of powder rapid prototyping manufacturing. As a suitable example of the production method of a three-dimensional manufactured article described herein, powder rapid prototyping manufacturing in which selective laser sintering (SLS) is mainly employed is described hereinbelow.

The method for producing a three-dimensional manufactured article described herein generally includes the following steps:

(1) supplying an additive manufacturing material to a manufacturing area of a powder rapid prototyping manufacturing machine;
(2) the supplied additive manufacturing material is uniformly and thinly deposited onto the manufacturing area, thereby forming a thin layer of the additive manufacturing material;
(3) applying, to the formed thin layer of the additive manufacturing material, energy for melting the additive manufacturing material, thereby bonding the additive manufacturing material; and
(4) supplying fresh additive manufacturing material onto the solidified additive manufacturing material (the above step (1)), and then stacking layers by repeating the steps (2) to (4), thereby obtaining a desired three-dimensional manufactured article.

Fig. 2 shows an example of a schematic view of the lamination manufacturing machine for powder rapid prototyping manufacturing, which includes, as a basic structure, a manufacturing area 10 which is a space in which powder rapid prototyping manufacturing is performed; a stock 12 for retaining the additive manufacturing material; a wiper 11 for assisting supply of the additive manufacturing material to the manufacturing area 10; and a solidification means (energy supply means such as a laser oscillator) 13 for solidifying (adhering) the additive manufacturing material.

The manufacturing area 10 typically has a manufacturing space of which outer circumference is surrounded below a manufacturing surface and has, in the manufacturing space, a lifting table 14 that can move up and down. The lifting table 14 can move downward a predetermined thickness $\Delta t1$ at a time and a desired article is manufactured on the lifting table 14. The stock 12 is disposed beside the manufacturing area 10 and includes a bottom plate (lifting table) that can move up and down by a cylinder or the like in, for example, a retention space of which outer circumference is surrounded. By moving up the bottom plate, a predetermined amount of the additive manufacturing material may be supplied (extruded) onto the manufacturing surface.

1. Supplying the additive manufacturing material

In such a lamination manufacturing machine, an additive manufacturing material is supplied to the manufacturing area 10 while the lifting table 14 is a predetermined thickness $\Delta t1$ below the manufacturing surface, thereby enabling preparation of an additive manufacturing material layer 20 having a predetermined thickness $\Delta t1$.

2. Formation of a thin layer of the additive manufacturing material

By driving the wiper 11 on the manufacturing surface upon this occasion, the additive manufacturing material extruded from the stock 12 may be supplied onto the manufacturing area 10 and the upper surface of the additive manufacturing material may be planarized to homogeneously form the additive manufacturing material layer 20.

3. Binding of the additive manufacturing material

Energy may be then applied only to the solidification region corresponding to the slice data of the first layer on, for example, the thus-formed first additive manufacturing material layer 20 via the solidification means 13 and the additive manufacturing material may be melted or sintered so as to have a desired cross-section shape, thereby forming the first powder solidified layer 21.

4. Repetitive lamination manufacturing

Thereafter, the additive manufacturing material is again supplied after lowering the lifting table 14 by a predetermined thickness $\Delta t1$ and flattened with the wiper 11, thereby forming the second additive manufacturing material layer 20. A heat source, a solidification composition or the like is then applied only to the solidification region corresponding to the slice data of the second layer on the additive manufacturing material layer 20 and the additive manufacturing material is solidified via the solidification means 13 to form the second powder solidified layer 21. On this occasion, the second powder solidified layer 21 and the first powder solidified layer 21 - the lower layer - are adhered to each other thereby being unified to form a laminate including up to the second layer.

The lifting table 14 is then lowered by a predetermined thickness $\Delta t1$ to form another additive manufacturing material layer 20, and a heat source, a solidification composition or the like is applied via the solidification means 13 to form a powder solidified layer 21 at a desired site. By repeating the process, a desired three-dimensional manufactured article may be produced.

A means for solidifying the additive manufacturing material to be selected is, for example, a method for ejecting a composition for solidifying the additive manufacturing material by ink-jet, a method for melting/solidifying (including sintering) the additive manufacturing material with heat by a laser or irradiation of an ultraviolet ray if the additive manufacturing material is photocurable so as to conform with the photocurable property thereof. A more preferable means is the method for melting/solidifying the additive manufacturing material, and specifically when the means for solidifying the additive manufacturing material is a laser, a carbon dioxide gas laser or a YAG laser, for example, may be suitably used. When the means for solidifying the additive manufacturing material is ejection of a composition by ink-jet, a composition containing, as an adhesive, polyvinylpyrrolidone, polyvinyl alcohol, polyvinyl butyral, polyacrylic acid, a polyacrylic acid derivative, polyamide or the like, or a composition containing, for example, a polymerization initiator and the like may be used. When a photocurable additive manufacturing material is used, an excimer laser (308 nm), a He-Cd laser (325 nm) or an Ar laser (351 to 346 nm) having an ultraviolet wavelength region, and when a visible light-curable resin is used, an Ar laser (488 nm) or the like may be used. Namely, it is preferable to select an appropriate means for solidifying the additive manufacturing material according to the properties of the additive manufacturing material used.

SLS is a technique for manufacturing a three-dimensional structure by repeating procedures of scanning a laser over a powder layer of deposited additive manufacturing material based on the slice data generated from 3D CAD or the like and melting/solidifying the powder layer into a desired shape cross-section by cross-section (slice data by slice data) to stack the layers. EBM is a technique for manufacturing a three-dimensional structure by selectively melting/solidifying the powder layer with an electron beam based on the slice data similarly prepared from 3D CAD or the like to stack the layers. Both techniques include the step of supplying a starting material of the structure, an additive manufacturing material, at a predetermined manufacturing site. Particularly in SLS and EBM, it is required to repeat a planarization step in which the additive manufacturing material having a thickness corresponding to the thickness of one cross-section is uniformly and thinly deposited throughout the manufacturing area on which the structure is manufactured. In the planarization step of the additive manufacturing material, flowability of the additive manufacturing material is an important parameter and significantly affects the finish of the prepared three-dimensional manufactured article. With regard to this, the additive manufacturing material for powder rapid prototyping manufacturing of the present invention has preferable flowability, and thus may prepare a three-dimensional manufactured article with preferable finish. It is also possible to manufacture a dense three-dimensional manufactured article having less pores by laser beam irradiation. On this occasion, a reduction of the laser irradiation speed is not particularly required. Accordingly, manufactured articles containing a ceramic may be more densely and rapidly manufactured than in the past.

Laser metal deposition is, specifically, a technique in which an additive manufacturing material is provided at a desired site of a structure and irradiating with a laser beam to melt/solidify the additive manufacturing material and perform cladding on the site. When, for example, a physical deterioration such as wear is generated in a structure, the procedure allows cladding at the deteriorated site and the like by supplying to the deteriorated site an additive manufacturing material which is a material that composes the structure or a reinforcing material and melting/solidifying the additive manufacturing material. Cladding of the additive manufacturing material containing a ceramic may be performed so as to achieve high density and hardness.

The above embodiments may be modified as follows.

- The additive manufacturing material and the granulated particles (secondary particles) that form the additive manufacturing material and further primary particles that form the granulated particles may contain a component other than the main component such as inevitable impurities or additives. Namely, the purity is not particularly limited. However, for an application of, for example, forming a three-dimensional manufactured article having high functionality, it is preferable to avoid inclusion of an unintended substance (element) and it is preferable that the additive manufacturing material has high purity. From such viewpoints, it is preferable that the secondary particles and the primary particles that form the secondary particles have high purities. For example, the purity is preferably 95% by mass or more, further 99% by mass or more, more preferably 99.9% by mass or more such as 99.99% by mass or more.

- The additive manufacturing material may contain another element (for example, for a ceramic, a transition metal element or an element such as Na, K and Rb) for the purpose of, for example, adjusting colour tone of a three-dimensional manufactured article to be formed or may contain another element for the purpose of increasing the functionality. Some of the elements that form the additive manufacturing material may be contained in the form of ions, complexes and the like.

- While the additive manufacturing material is powder formed from granulated particles (typically having voids (pores)) having the form of secondary particles in which primary particles are three-dimensionally bound, the additive manufacturing material may contain particles having the form other than secondary particles. However, it is preferable that the content of the particles other than secondary particles is as low as possible. The reasons for this are, firstly, the present invention is based on the finding that by using an additive manufacturing material that is formed from secondary particles, in which primary particles arc bound, for powder rapid prototyping manufacturing, manufactured articles that are denser than in the past may be manufactured. Therefore, when the ratio of the secondary particles in the specific form is increased relative to the total amount of the additive manufacturing material, the effect of the present invention is increased. In other words, when the ratio of the secondary particles in the specific form is deceased relative to the total amount of the additive manufacturing material, the effect of the present invention is less exhibited.

The secondary particles in the specific form of the present invention exhibit another preferable effect based on the following idea. For example, when the additive manufacturing material is prepared by mixing more than one type of single particles such as metal particles and ceramic particles, due to the difference in the specific gravity, particles formed from a material having a higher specific gravity tend to go below and particles having a lower specific gravity tend to go above, thereby generating a deviation of components in the additive manufacturing material. In contrast, the secondary particles in the specific form of the present invention have a uniform specific gravity and thus a deviation of components in the additive manufacturing material hardly occurs and thus the produced three-dimensional manufactured article has improved finish even when secondary particles are formed from cermet particles in which metal particles and ceramic particles are mixed or secondary particles are formed by mixing more than one type of material particles. From this point of view, it is preferable that the ratio of the secondary particles in the specific form relative to the total amount of the additive manufacturing material is high. Therefore, the lower limit of the content of the secondary particles relative to the additive manufacturing material is preferably 90% by weight and more preferably 95% by weight. The upper limit is generally 98% by weight and may be appropriately adjusted by mixing a component other than the secondary particles such as an additive to an extent that does not deteriorate the effect of the present invention.

<Examples>

Examples pertaining to the present invention are hereinafter described. However, it is not intended that the present invention is limited to those described in Examples below.

As ceramic powder (first powder), powders of tungsten carbide (WC) and chromium carbide (CrC) were prepared. The powders prepared had, as indicated in Table 1, average particle diameters varying from 0.2 $\mu$m to 4.5 $\mu$m.

As metal powder (second powder), powders of cobalt (Co), Stellite alloy (Stellite 6), nickel-chromium alloy (Ni-20Cr) and stainless steel (SUS304) were prepared. The powders prepared had, as indicated in Table 1, average particle diameters of 2 $\mu$m or 9 $\mu$m.

[Average particle diameter]

The average particle diameter of starting material powders used for production of additive manufacturing materials was the $D_{50}$ particle diameter in the particle size distribution based on the volume measured on a laser diffraction/scattering particle size analyser (produced by Horiba Ltd., LA-300). For an additive manufacturing material having an average particle diameter of less than 1 $\mu$m as measured by laser diffraction/scattering, the average particle diameter was determined by measuring diameters corresponding to circles of 100 or more particles from planar view images (1000- to 2000-fold magnification) obtained by observation under a scanning electron microscope (SEM, produced by Hitachi High-Technologies Corporation, S-3000N) and calculating an arithmetic average thereof with an image analysis software (produced by Nippon Roper K.K., Image-Pro Plus).

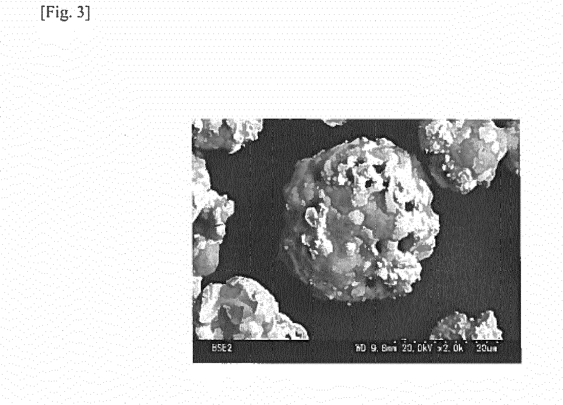

The prepared ceramic powder and metal powder were mixed at the proportions and compositions indicated in Table 1 and granulated followed by sintering to prepare granulated sintered powder. Specifically, ceramic powder and metal powder were mixed at predetermined compositions and dispersed in a solvent (such as a mixed solvent of water and an alcohol) together with 3% by mass of binder (PVA: polyvinyl alcohol) relative to 100% by mass of the mixed powder, thereby preparing a slurry. The slurry was then granulated into the shape of droplets followed by drying and sintering on a spray granulating machine and a drying/sintering oven and the like to produce granulated particles (secondary particles). The drying temperature of droplets was 200°C and the sintering temperature was about 90% (0.9 × Tm°C) of the melting point (Tm) of metal in the metal powder used. The granulated particles were classified, if necessary, thereby obtaining additive manufacturing materials (samples 1 to 17). For reference, a SEM image of granulated sintered particles in the additive manufacturing material of Example 4 is shown in Fig. 3.

Examples 1, 10, 13 and 16 are reference examples, not according to the invention.

[Average particle diameter]

The obtained additive manufacturing materials were measured for the average particle diameter and the bulk density and the results thereof are indicated in Table 1.

The average particle diameter of additive manufacturing materials was the $D_{50}$ particle diameter measured on, similar to the average particle diameter of starting material powders, a laser diffraction/scattering particle size analyser (produced by Horiba Ltd., LA-300).

Additive manufacturing materials were classified (sieved), if necessary, to adjust the average particle diameter to 30 $\mu$m.

[Bulk density]

Bulk density adopted is the value measured according to "Metallic powders-Determination of apparent density" under JIS Z2504:2012. Specifically, a container of a predetermined volume is filled with powder free-flowing from an orifice of a diameter of 2.5 mm, and the mass of the powder is measured to calculate the bulk density. In the present specification, the bulk density adopted was the value measured with JIS bulk specific gravity analyser for metal powder (produced by Tsutsui Scientific Instruments Co., Ltd.).

[Select laser melting (SLM)]

The prepared additive manufacturing materials were subjected to lamination manufacturing by a powder rapid prototyping manufacturing process, select laser melting, thereby obtaining three-dimensional manufactured articles. For lamination manufacturing, a laser sintering powder rapid prototyping manufacturing system (produced by SLM Solutions Group AG, SLM 125HL) was used. Specifically, each additive manufacturing material was supplied to the manufacturing area at a thickness of 50 μm per layer and the additive manufacturing material was planarized with a wiper attached to the machine to form a deposited layer (thin layer) of the additive manufacturing material. The thin layer of the additive manufacturing material was two-dimensionally irradiated with a fibre laser, thereby forming a layer-shaped manufactured article. The step of supplying the additive manufacturing material and planarization and the step of laser irradiation were repeated to obtain a three-dimensional manufactured article (design: 20 layers (1 mm)). The process conditions were as follows: the laser focus was about ⌀ 150 μm, the laser output was 100 W, the laser scanning speed was 300 mm/sec, the temperature environment was normal temperature and the atmosphere surrounding the additive manufacturing material was Ar gas.

[Porosity]

As an index for evaluating the finish of prepared three-dimensional manufactured articles, the three-dimensional manufactured articles were measured for porosity. The porosity determined was the value measured by image analysis on polished cross-sections sectioned in the direction of manufacturing (thickness direction) of each three-dimensional manufactured article. Specifically, an image of the cross-section of a three-dimensional manufactured article was obtained, binarization was performed with an image analysis software to separate the cross-section of the three-dimensional manufactured article to a pore section and a solid phase section (manufactured section of the manufactured article), and the proportion of the area of the pore section in the total cross-sectional area was calculated as porosity.

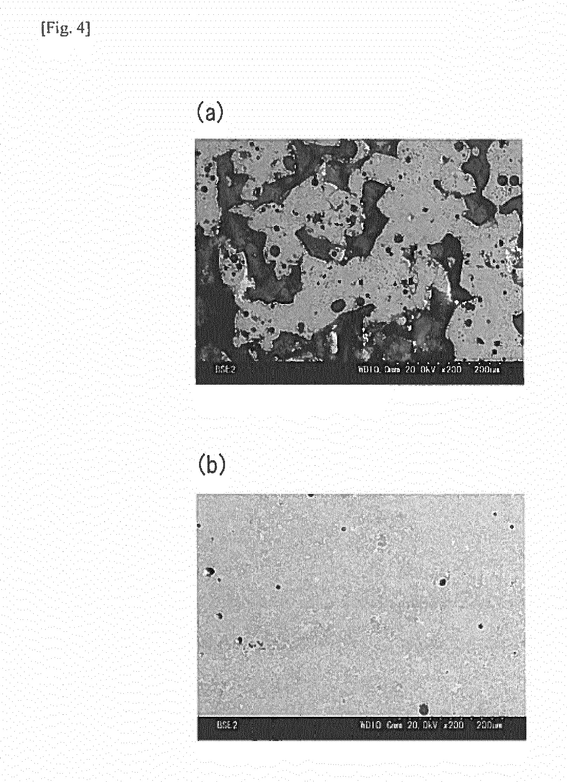

The porosity was measured with an observation image (which may suitably be any of a secondary electron image, a compositional image or an X-ray image) from a scanning electron microscope (SEM; produced by Hitachi High-Technologies Corporation, S-3000N). For reference, SEM images of manufactured articles of Example 1 and Example 4 are shown in Fig. 4(a) and (b) in sequence. The image analysis software used was Image-Pro (produced by Media Cybernetics, Inc.). The results of measurements of the porosity of three-dimensional manufactured articles are shown under "porosity" in Table 1.

[Uniformity]

By SEM observation carried out during measurement of the porosity, the uniformity of the texture of the manufactured articles was examined. Specifically, during SEM observation of cross-sections of manufactured articles containing ceramic and metal, size and extent of dispersion of ceramic phase and metal phase in microstructures and the presence or absence of cracks were observed. The samples were evaluated as "O" when no crack was observed and it could be judged that ceramic phase and metal phase had almost uniform size and dispersion, and the samples were evaluated as "X" when cracks were observed and it could be judged that ceramic phase and metal phase did not have uniform size or distribution. The results are indicated in Table 1.

[Hardness]

Each manufactured article was measured on the basis of Vickers hardness test method under JIS Z2244:2009 and JIS R1610:2003. Specifically, by using a micro hardness tester (produced by Shimadzu Corporation, HMV-1), the surface of the three-dimensional manufactured article was indented with a diamond indenter having a facing angle of 136° at a testing force of 1.96 N and from the resulting indentation, Vickers hardness (Hv0.2) was calculated. The results are indicated under "Hardness" in Table 1. Examples 1, 10, 13 and 16 are reference examples, not according to the invention.

[Table 1]

Table 1

| Example | First powder (ceramic) | | | Second powder (metal) | | | Powder material (granulation) | | Manufactured article | | |
|---|---|---|---|---|---|---|---|---|---|---|---|
| | Type | $D_{50}$ (μm) | Composition (% by mass) | Metal powder | $D_{50}$ (μm) | Composition (% by mass) | $D_{50}$ (μm) | Bulk density (g/cm³) | Porosity (%) | Uniformity | Hardness Hv0.2 |
| 1 | WC | 0.2 | 90 | Co | 2 | 10 | 30 | 5.3 | 28 | X | 1000 |
| 2 | | 0.2 | 85 | | 2 | 15 | 30 | 5.0 | 8 | O | 1200 |
| 3 | | 0.2 | 70 | | 2 | 30 | 30 | 4.5 | 4 | O | 1300 |
| 4 | WC | 0.2 | 50 | Co | 2 | 50 | 30 | 4.0 | 1 | O | 1400 |
| 5 | | 0.2 | 30 | | 2 | 70 | 30 | 3.5 | 1 | O | 1200 |
| 6 | | 0.2 | 15 | | 2 | 85 | 30 | 3.2 | 1 | O | 1000 |
| 7 | | 0.2 | 10 | | 2 | 90 | 30 | 3.0 | 0 | O | 600 |
| 8 | WC | 3 | 50 | Stellite | 9 | 50 | 30 | 3.3 | 1 | O | 1300 |
| 9 | WC | 1.5 | 85 | Stellite | 9 | 15 | 30 | 3.6 | 8 | O | 1100 |
| 10 | | 3 | 90 | | 9 | 10 | 30 | 3.8 | 12 | X | 900 |
| 11 | | 4.5 | 40 | | 9 | 60 | 30 | 3.5 | 1 | O | 800 |
| 12 | CrC | 4.5 | 75 | NiCr | 9 | 25 | 30 | 2.9 | 7 | O | 1100 |
| 13 | | 4.5 | 90 | | 9 | 10 | 30 | 2.7 | 11 | X | 500 |
| 14 | | 2 | 50 | | 9 | 50 | 30 | 3.5 | 1 | O | 1100 |
| 15 | WC | 2 | 75 | SUS | 9 | 25 | 30 | 4.0 | 8 | O | 1000 |
| 16 | | 2 | 90 | | 9 | 10 | 30 | 4.4 | 15 | X | 900 |

[Evaluation]

Example 1 is a reference example not according to the invention.

As apparent from Examples 1 to 7, it was found that mixing ceramic powder (WC in the present Examples) and metal powder (Co) to obtain granulated powder made three-dimensional manufacturing possible. In addition, it was found that by increasing the proportion of metal powder in granulated powder, the porosity of the obtained manufactured articles decreased.

For example, when the additive manufacturing material of Example 1 obtained by adding 10% by mass of metal powder to ceramic powder was used, the obtained manufactured article had a porosity of about 30% and the obtained manufactured article had a relatively porous texture as shown in Fig. 4(a). It is apparent that the manufactured article of Example 1 is denser than, for example, manufactured articles manufactured in Non Patent Literature 2 (laminated manufactured articles fromWC-10% Co powder and powder further containing Cu-20% Sn powder). However, the manufactured article may be equivalent to or slightly more porous than manufactured articles obtained with, for example, manufacturing powder containing only metal.

In contrast, it was found that when, for example, the additive manufacturing material of Example 4 obtained by adding 50% by mass of metal powder to ceramic powder was used, the porosity of the manufactured article was reduced to 1%. The additive manufacturing material of Example 4 is, as shown in Fig. 3, granulated sintered particles, and thus the external shape thereof is diverted from a geometric sphere and the unevenness resulting from the shape of primary particles clearly appears on the surface. The granulated sintered particles of Example 4 contain a relatively high amount of metal powder such as 50% by mass, and thus it may be observed that the granulated sintered particles are relatively in a relatively advanced stage of sintering and primary particles are relatively densely sintered. However, because of being granulated sintered particles, a plurality of pores is inevitably provided due to voids of primary particles. It may be observed that the granulated particles of the present Example contain more than one relatively large pores having opening diameters of about 1 to 5 $\mu$m. It was observed that the article manufactured from such an additive manufacturing material had a dense texture as shown in Fig. 4(b). Namely, it was demonstrated that by adding an appropriate amount of metal powder to ceramic powder, the additive manufacturing material has increased meltability and manufacturing characteristics and enables manufacturing of a denser manufactured article.

It was not easy to obtain a manufactured article having a porosity of 1% even when manufacturing powder containing only a metal material was used, and thus it can be understood that the additive manufacturing material in the form of granulated particles as described herein is extremely suitable for powder rapid prototyping manufacturing. In addition, it was demonstrated that the obtained manufactured article had an extremely homogeneous and excellent texture in which ceramic phase and metal phase were finely and uniformly mixed. For example, in the present Examples, metal powder had an average particle diameter that was about 1/10 of the average particle diameter of ceramic powder. Therefore, it is believed that metal melted at a temperature that was sufficiently lower than the melting point of ceramics and ceramic particles in the form of primary particles that form the additive manufacturing material were finely dispersed in the manufactured article. Such a texture may be regarded as, for example, a state of cermet (in this case, WC/Co superalloy) in which metal phase and ceramic phase are finely and uniformly mixed. Namely, it can be considered that the additive manufacturing material described herein may provide a manufactured article that is cermet or superalloy.

With regard to the hardness of manufactured articles, it is found that manufactured articles having relatively a high degree of hardness such as 1000 MPa were attained even when the additive manufacturing material of Example 1 obtained by adding 10% by mass of metal powder to ceramic powder. However, as apparent from Examples 1 to 7, it was found that the hardness increased up to 1400 MPa with an increase of the proportion of metal powder added to ceramic powder. This is an unexpected effect because a bulk of only metal powder (such as Co) has a lower hardness. It was also found that the hardness of manufactured articles was maximum when the proportion of metal powder was about 50% by mass and decreased thereafter. Namely, it was demonstrated that in the additive manufacturing material described herein, mere addition of metal powder to ceramic powder is not sufficient and the proportion of addition thereof is also important in the application of manufacturing.

Examples 8 to 10 represent examples in which the additive manufacturing materials prepared from WC as ceramic powder and Stellite instead of Co as metal powder were used. Stellite is a material that has such a high melting point as 1200°C or higher and is difficult to be melted compared to general metal materials. As Stellite having a relatively small average particle diameter is not readily available, the one of about 9 $\mu$m was used. WC having a relatively high average particle diameter was also used. For example, in the present Examples, ceramic powder had an average particle diameter that was about 1/3 to 1/6 of the average particle diameter of metal powder. It was found that even when such WC and Stellite were used for the additive manufacturing material described herein, dense manufactured articles such as 10% or less could be produced. It was also demonstrated that in the combination of the materials, manufactured articles having a high degree of hardness could be obtained by adding metal powder at a proportion of about 50% by mass. Example 10 is a reference example not according to the invention.

Examples 11 to 13 represent examples in which additive manufacturing materials prepared from chromium carbide (CrC) instead of WC as ceramic powder and NiCr alloy as metal powder were used. CrC is generally used as a wear resistant material and NiCr alloy is a heat resistant alloy typically including Inconel, Incoloy and Hastelloy. For example, in the present Examples, ceramic powder had an average particle diameter that was about 1/2 of the average particle diameter of metal powder. It was found that even when such CrC and NiCr alloy were used for the additive manufacturing material described herein, dense manufactured articles such as 10% or less could be produced. It was also demonstrated that in the combination of the materials, manufactured articles having a high degree of hardness could be obtained by adding metal powder at a proportion of about 25% by mass to 30% by mass.

Examples 14 to 16 represent examples in which additive manufacturing materials prepared from WC as ceramic powder and SUS304 steel as metal powder were used. CrC is generally used as a wear resistant material and NiCr alloy is a heat resistant alloy typically including Inconel, Incoloy and Hastelloy. For example, in the present Examples, ceramic powder had an average particle diameter that was about 2/10 to 3/10 of the average particle diameter of metal powder. It was found that even when such CrC and NiCr alloy were used for the additive manufacturing material described herein, dense manufactured articles such as 10% or less could be produced. It was also demonstrated that in the combination of the materials, manufactured articles having a high degree of hardness could be obtained by adding metal powder at a proportion of about 25% by mass to 30% by mass. Examples 13 and 16 are reference examples not according to the invention.

The present invention has been described hereinabove by way of preferable embodiments. However, it is apparent that the descriptions are not limitation and various modifications are possible. Although not indicated specifically, the inventors of the present invention observed that adding above 10% by mass (such as 12% by mass) of metal powder to ceramic powder could configure the porosity of the manufactured article to be 10% or less (such as 9%). From the above examples, a person skilled in the art could understand that by using granulated particles including a first powder containing a ceramic and a second powder containing a metal, manufactured articles containing a ceramic could be manufactured by lamination manufacturing which are denser than in the past. The additive manufacturing material described herein may be formed from granulated sintered particles which are in an advanced stage of sintering as shown in Fig. 3, or may be granulated particles without sintering in which the starting material, primary particles, maintains almost the original shape thereof as shown in Fig. 1 and/or granulated sintered particles in a relatively early stage of sintering.

Reference Signs List

| 10 | Manufacturing area |
| 11 | Wiper |
| 12 | Stock |
| 13 | Means for solidifying the additive manufacturing material |
| 14 | Lifting table |
| 20 | Additive manufacturing material layer |
| 21 | Powder solidified layer |

**Claims**

1. An additive manufacturing material for powder rapid prototyping manufacturing, comprising:

a first powder containing a ceramic as a main component; and
a second powder containing a metal as a main component,

wherein

the metal is an elemental substance of a metal element selected from the group consisting of magnesium (Mg), aluminum (Al), titanium (Ti), chromium (Cr), manganese (Mn), iron (Fe), cobalt (Co), nickel (Ni), copper (Cu), zinc (Zn), zirconium (Zr), gold (Au), silver (Ag), platinum (Pt), iridium (Ir), bismuth (Bi), niobium (Nb), molybdenum (Mo), tin (Sn), tungsten (W), and lead (Pb), or an alloy of the metal element and one or more other elements, an average particle diameter $D_1$ of the first powder and an average particle diameter $D_2$ of the second powder fulfil $D_1 \leq 0.5 \times D_2$, wherein the average particle diameters $D_1$ and $D_2$ are particle diameters at 50% of the cumulative value ($D_{50}$) in the particle size distribution based on the laser diffraction/scattering method, the first powder and the second powder form granulated particles in which primary particles of the first powder and primary particles of the second powder are three-dimensionally bound through voids, and
the second powder is included at a proportion of 15 % by mass or more and less than 90% by mass relative to a sum of the first powder and the second powder.

2. The additive manufacturing material according to claim 1, wherein the alloy is at least one selected from the group consisting of Cu-Al alloy, Cu-Al-Fe alloy, Cu-Ni alloy, Cu-Ni-In alloy, Ni-Al alloy, Ni-Cr alloy, Ni-Cr-Fe alloy, Ni-Cr-Al alloy, Hastelloy, Ni-Cu alloy, Co-Cr-W alloy, Co-Cr-Ni-W-C alloy, Co-Mo-Cr-Si alloy, Co-Cr-Al-Y alloy, Ni-Cr-Fe-Si-B-C alloy, Ni-Cr-Mo-Cu-Fe-Si-B-C alloy, Co-Ni-Cr-Mo-Fe-Si-B-C alloy, martensite-age hardened steel, carbon steels, and Ti-6Al-4V.

3. The additive manufacturing material according to claim 1 or 2, wherein the granulated particles have an average particle diameter of 1 $\mu$m or more and 100 $\mu$m or less, wherein said average particle diameter is a particle diameter at 50% of the cumulative value ($D_{50}$) in the particle size distribution based on the laser diffraction/scattering method.

4. The additive manufacturing material according to any one of claims 1 to 3, wherein the primary particles of the first powder and the second powder have average particle diameters (Dave) of 0.1 $\mu$m or more and 20 $\mu$m or less, wherein said average particle diameter (Dave) is determined on the basis of the following equation:
Dave = 6/($\rho$Sm), wherein Sm is the specific surface area and $\rho$ is the density of the entire additive manufacturing material, and wherein said density and said specific surface area are determined as described in the specification.

5. The additive manufacturing material according to any one of claims 1 to 4, wherein the first powder is a carbide ceramic.

6. The additive manufacturing material according to any one of claims 1 to 5, wherein the first powder and the second powder are combined by sintering.

7. The additive manufacturing material according to any one of claims 1 to 6, wherein the first powder and the second powder are combined by a binder.

8. An article, which is a three-dimensional manufactured article of the additive manufacturing material according to any one of claims 1 to 7.

9. A method for producing a three-dimensional manufactured article, the method comprising the steps of:

(1) supplying the additive manufacturing material according to any one of claims 1-7 to a manufacturing area;
(2) forming a layer of the supplied additive manufacturing material deposited onto the manufacturing area;
(3) applying energy for melting the additive manufacturing material to a predetermined region of the layer, and thereby binding the additive manufacturing material of the predetermined region to form a solidified layer of the additive manufacturing material;
(4) supplying fresh additive manufacturing material onto the solidified layer; and
(5) repeating the steps (2) to (4), thereby obtaining a desired three-dimensional manufactured article.


**Patentansprüche**

1. Additivherstellungsmaterial für Pulver-Rapid-Prototyping-Herstellung, umfassend:

ein erstes Pulver, enthaltend eine Keramik als eine Hauptkomponente; und
ein zweites Pulver, enthaltend ein Metall als eine Hauptkomponente,

wobei

das Metall eine elementare Substanz eines Metallelements ist, ausgewählt aus der Gruppe, bestehend aus Magnesium (Mg), Aluminium (Al), Titan (Ti), Chrom (Cr), Mangan (Mn), Eisen (Fe), Kobalt (Co), Nickel (Ni), Kupfer (Cu), Zink (Zn), Zirkonium (Zr), Gold (Au), Silber (Ag), Platin (Pt), Iridium (Ir), Wismut (Bi), Niob (Nb), Molybdän (Mo), Zinn (Sn), Wolfram (W) und Blei (Pb) oder einer Legierung aus dem Metallelement und einem oder mehreren anderen Elementen,
ein durchschnittlicher Partikeldurchmesser $D_1$ des ersten Pulvers und ein durchschnittlicher Partikeldurchmes-

ser $D_2$ des zweiten Pulvers $D_1 \leq 0{,}5 \times D_2$ erfüllen, wobei die durchschnittlichen Partikeldurchmesser $D_1$ und $D_2$ Partikeldurchmesser bei 50 % des kumulativen Wertes ($D_{50}$) in der Partikelgrößenverteilung, basierend auf dem Laserbeugungs-/Streuungsverfahren, sind,

das erste Pulver und das zweite Pulver granulierte Partikel bilden, in denen Primärpartikel des ersten Pulvers und Primärpartikel des zweiten Pulvers durch Hohlräume dreidimensional gebunden sind, und

das zweite Pulver mit einem Anteil von 15 Massenprozent oder mehr und weniger als 90 Massenprozent, bezogen auf eine Summe des ersten und des zweiten Pulvers, enthalten ist.

2. Das Additivherstellungsmaterial nach Anspruch 1, wobei die Legierung mindestens eine ist, ausgewählt aus der Gruppe, bestehend aus Cu-Al-Legierung, Cu-Al-Fe-Legierung, Cu-Ni-Legierung, Cu-Ni-In-Legierung, Ni-Al-Legierung, Ni-Cr-Legierung, Ni-Cr-Fe-Legierung, Ni-Cr-Al-Legierung, Hastelloy, Ni-Cu-Legierung, Co-Cr-W-Legierung, Co-Cr-Ni-W-C-Legierung, Co-Mo-Cr-Si-Legierung, Co-Cr-Al-Y-Legierung, Ni-Cr-Fe-Si-B-C-Legierung, Ni-Cr-Mo-Cu-Fe-Si-B-C-Legierung, Co-Ni-Cr-Mo-Fe-Si-B-C-Legierung, Martensit-ausgehärtetem Stahl, Kohlenstoffstählen und Ti-6Al-4V.

3. Das Additivherstellungsmaterial nach Anspruch 1 oder 2, wobei die granulierten Partikel einen durchschnittlichen Partikeldurchmesser von 1 μm oder mehr und 100 μm oder weniger besitzen, wobei der durchschnittliche Partikeldurchmesser ein Partikeldurchmesser bei 50 % des kumulativen Wertes ($D_{50}$) in der Partikelgrößenverteilung, basierend auf dem Laserbeugungs-/Streuungsverfahren, ist.

4. Das Additivherstellungsmaterial nach irgendeinem der Ansprüche 1 bis 3, wobei die Primärpartikel des ersten Pulvers und des zweiten Pulvers durchschnittliche Partikeldurchmesser (Dave) von 0,1 μm oder mehr und 20 μm oder weniger besitzen, wobei besagter durchschnittliche Partikeldurchmesser (Dave) auf der Basis der folgenden Gleichung bestimmt wird:

Dave = 6/(pSm), wobei Sm die spezifische Oberfläche ist und pdie Dichte des gesamten Additivherstellungsmaterials ist, und wobei besagte Dichte und besagte spezifische Oberfläche wie in der Beschreibung beschrieben bestimmt werden.

5. Das Additivherstellungsmaterial nach irgendeinem der Ansprüche 1 bis 4, wobei das erste Pulver eine Karbidkeramik ist.

6. Das Additivherstellungsmaterial nach irgendeinem der Ansprüche 1 bis 5, wobei das erste Pulver und das zweite Pulver durch Sintern kombiniert sind.

7. Das Additivherstellungsmaterial nach irgendeinem der Ansprüche 1 bis 6, wobei das erste Pulver und das zweite Pulver durch einen Binder kombiniert sind.

8. Gegenstand, der ein dreidimensional hergestellter Gegenstand aus dem Additivherstellungsmaterial nach irgendeinem der Ansprüche 1 bis 7 ist.

9. Verfahren zum Herstellen eines dreidimensional hergestellten Gegenstands, wobei das Verfahren die folgenden Schritte umfasst:

(1) Zuführen des Additivherstellungsmaterials nach irdendeinem der Ansprüche 1-7 in einen Herstellungsbereich;
(2) Bilden einer Schicht aus dem zugeführten Additivherstellungsmaterial, abgeschieden auf den Herstellungsbereich;
(3) Aufbringen von Energie zum Schmelzen des Additivherstellungsmaterials auf einen vorbestimmten Bereich der Schicht und dadurch Binden des Additivherstellungsmaterials des vorbestimmten Bereichs, um eine verfestigte Schicht des Additivherstellungsmaterials zu bilden;
(4) Zuführen von frischem Additivherstellungsmaterial auf die verfestigte Schicht; und
(5) Wiederholen der Schritte (2) bis (4), wodurch ein gewünschter dreidimensional hergestellter Gegenstand erhalten wird.

**Revendications**

1. Matériau de fabrication additive destiné à la fabrication par prototypage rapide de poudre, comprenant :

une première poudre contenant une céramique comme composant principal ; et

une seconde poudre contenant un métal comme composant principal,

dans lequel

le métal est une substance élémentaire d'un élément métallique choisi dans le groupe comprenant le magnésium (Mg), l'aluminium (Al), le titane (Ti), le chrome (Cr), le manganèse (Mn), le fer (Fe), le cobalt (Co), le nickel (Ni), le cuivre (Cu), le zinc (Zn), le zirconium (Zr), l'or (Au), l'argent (Ag), le platine (Pt), l'iridium (Ir), le bismuth (Bi), le niobium (Nb), le molybdène (Mo), l'étain (Sn), le tungstène (W) et le plomb (Pb), ou un alliage de l'élément métallique et d'un autre ou d'autres éléments,

un diamètre moyen de particules $D_1$ de la première poudre et un diamètre moyen de particules $D_2$ de la seconde poudre satisfont à $D_1 \leq 0,5 \times D_2$, dans lequel les diamètres moyens de particules $D_1$ et $D_2$ sont des diamètres de particules à 50 % de la valeur cumulée ($D_{50}$) de la distribution granulométrique selon la méthode de diffusion et diffraction laser,

la première poudre et la seconde poudre forment des particules granulées dans lesquelles des particules primaires de la première poudre et des particules primaires de la seconde poudre sont reliées tridimensionnellement par des vides, et

la seconde poudre est incluse en proportion supérieure ou égale à 15 % en masse et inférieure à 90 % en masse par rapport à une somme de la première poudre et de la seconde poudre.

2. Matériau de fabrication additive selon la revendication 1, dans lequel l'alliage est au moins un alliage choisi dans le groupe comprenant un alliage Cu-Al, un alliage Cu-Al-Fe, un alliage Cu-Ni, un alliage Cu-Ni-In, un alliage Ni-Al, un alliage Ni-Cr, un alliage Ni-Cr-Fe, un alliage Ni-Cr-Al, un alliage Hastelloy, un alliage Ni-Cu, un alliage Co-Cr-W, un alliage Co-Cr-Ni-W-C, un alliage Co-Mo-Cr-Si, un alliage Co-Cr-Al-Y, un alliage Ni-Cr-Fe-Si-B-C, un alliage Ni-Cr-Mo-Cu-Fe-Si-B-C, un alliage Co-Ni-Cr-Mo-Fe-Si-B-C, un acier martensitique durci par vieillissement, des aciers au carbone et le Ti-6A1-4V.

3. Matériau de fabrication additive selon la revendication 1 ou 2, dans lequel les particules granulées ont un diamètre de particules moyen supérieur ou égal à 1 $\mu$m et inférieur ou égal à 100 $\mu$m, dans lequel ledit diamètre de particules moyen est un diamètre de particules à 50 % de la valeur cumulée ($D_{50}$) de la distribution granulométrique selon la méthode de diffusion et diffraction laser.

4. Matériau de fabrication additive selon l'une quelconque des revendications 1 à 3, dans lequel les particules primaires de la première poudre et de la seconde poudre ont des diamètres de particules moyens ($D_{ave}$) supérieurs ou égaux à 0,1 $\mu$m et inférieurs ou égaux à 20 $\mu$m, dans lequel ledit diamètre de particules moyen ($D_{ave}$) est déterminé sur la base de l'équation suivante : ($D_{ave}$) = 6/($\rho$Sm), dans lequel Sm est l'aire de surface spécifique et $\rho$ est la masse volumique de la totalité du matériau de fabrication additive, et dans lequel ladite masse volumique et ladite aire de surface spécifique sont déterminées de la manière indiquée dans la description.

5. Matériau de fabrication additive selon l'une quelconque des revendications 1 à 4, dans lequel la première poudre est une céramique à base de carbure.

6. Matériau de fabrication additive selon l'une quelconque des revendications 1 à 5, dans lequel la première poudre et la seconde poudre sont combinées par frittage.

7. Matériau de fabrication additive selon l'une quelconque des revendications 1 à 6, dans lequel la première poudre et la seconde poudre sont combinées par un liant.

8. Article, qui est un article fabriqué tridimensionnel fait du matériau de fabrication additive selon l'une quelconque des revendications 1 à 7.

9. Procédé de production d'un article fabriqué tridimensionnel, le procédé comprenant les étapes consistant à :

(1) alimenter le matériau de fabrication additive selon l'une quelconque des revendications 1-7 vers une zone de fabrication ;

(2) former une couche du matériau de fabrication additive alimenté déposé sur la zone de fabrication ;

(3) appliquer de l'énergie pour faire fondre le matériau de fabrication additive sur une région prédéterminée de la couche, ce qui permet de lier le matériau de fabrication additive de la région prédéterminée pour former une couche solidifiée du matériau de fabrication additive ;

(4) alimenter du matériau de fabrication additive frais sur la couche solidifiée ; et

(5) répéter les étapes (2) à (4), ce qui permet d'obtenir un article fabriqué tridimensionnel voulu.

[Fig. 1]

[Fig. 2]

[Fig. 3]

[Fig. 4]

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015250695 A

- WO 2015162206 A

**Non-patent literature cited in the description**

- **S. KUMAR.** *J. MATER. PROCESS. TECHNOL,* 2009, vol. 209, 3840-3848
- *Technology for Next Generation,* 2011, vol. 2, 95-100

- **PICAS et al.** Microstructure and wear resistance of WC-Co by three consolidation processing techniques. *International Journal of Refractory Metals and Hard Materials,* 01 March 2009, vol. 27 (2), 344-349